# FASCICULE DE BREVET EUROPEEN

(11) **EP 3 279 120 B1**
(45) Date de publication et mention de la délivrance du brevet: **08.06.2022**
(21) Numéro de dépôt: 17001316.3
(22) Date de dépôt: 01.08.2017
(51) Int. Cl.: B65G 69/00, B61D 45/00

(54) **DISPOSITIF D'IMMOBILISATION DE VÉHICULE ET UTILISATION**
WEGFAHRSPERRVORRICHTUNG FÜR FAHRZEUG, UND IHR EINSATZ
VEHICLE IMMOBILISATION DEVICE AND USE THEREOF

(30) Priorité: 03.08.2016 FR 1601204
(43) Date de publication de la demande: 07.02.2018
(73) Titulaire: EXPRESSO France SAS, 67319 Wasselonne (FR)
(72) Inventeur: Roere, Michel, 67720 Weyersheim (FR)
(74) Mandataire: Munier, Laurent

(56) Documents cités:
- EP-A1- 2 660 170
- US-A- 3 164 346
- US-A- 3 180 282
- US-A- 3 189 307
- US-A- 5 004 386
- US-A- 6 089 544

## Description

La présente invention se rapporte à l'immobilisation de remorques routières.

L'État de la technique connaît deux types d'immobilisations de véhicules routiers typiquement des camions.

D'une part le calage, la roue vient s'appuyer sur une cale. Ce type d'immobilisation connue présente le risque que le camion ou la remorque passe par-dessus la cale et sorte de l'immobilisation entrainant des risques d'accidents.

D'autre part, le blocage. Les quais de transbordement sont équipés de moyens de guidage du véhicule perpendiculaire au quai. Ce qui permet aux camions et aux remorques de venir accoster le quai en marche arrière. L'axe longitudinal de ces véhicules étant parallèle au moyen de guidage.

Le document EP2236445 (au nom de la demanderesse) enseigne un dispositif d'immobilisation avantageux. Ce dispositif connu comprend un moyen d'immobilisation de la roue déplaçable d'une position initiale repos vers une position de travail à l'avant du pneu en s'adaptant à différentes tailles de pneu. Ce dispositif bloqueur immobilise les véhicules de transport de marchandises pendant les phases de transbordement desdits véhicules. Ceci, par action sur le pneu d'une des roues. Il comprend le moyen de guidage latéral dudit véhicule positionné parallèlement à la direction de roulement du véhicule à immobiliser. Cette direction est perpendiculaire au quai. Il comprend un chariot mobile le long dudit moyen de guidage, un moyen de déplacement dudit chariot le long du moyen de guidage, un moyen de verrouillage dudit chariot sur ledit moyen de guidage, un moyen de détection du pneu, une pièce de calage dont une extrémité est fixée sur le châssis du dispositif, un mécanisme de rotation de ladite pièce de calage. Le dispositif connu comprend en plus un moyen de mesure du diamètre du pneu et un moyen de traitement de ladite mesure en vue du réglage de la position angulaire de ladite pièce de calage. Ce qui lui permet de s'adapter à la plupart des véhicules routiers. Ici, il faut comprendre le verbe s'adapter comme s'adaptant à des véhicules de différentes longueurs y compris des roues de différents espacements ; ceci grâce aux déplacements longitudinaux du chariot sur le moyen de guidage. S'adapter doit également se comprendre comme s'adaptant à des véhicules de différentes hauteurs avec des roues plus petites ou plus grandes selon la hauteur plus petite ou plus grande du véhicule. Il est important de conserver cette universalité.

Mais, les dispositifs connus d'immobilisation tels que celui présenté par le document EP2236445 ont encore en commun avec les dispositifs de calage d'immobiliser ou bloquer le véhicule par action sur une roue.

Or, un certain nombre de remorques routières ne présente des roues qu'en partie arrière. La partie avant quand le véhicule tracteur est parti repose sur des béquilles. C'est le cas pour les semi-remorques qui sont constitués d'une remorque avec des roues arrières tractée par un véhicule tracteur. La remorque par sa partie avant est fixée au tracteur. Cette fixation apporte l'équilibre de l'ensemble du véhicule semi-remorque.

En effet, un véhicule semi-remorque comprend une remorque avec des roues arrières tirée par un tracteur qui possède les roues avant. Pour le chargement ou le déchargement, le chauffeur vient en marche arrière mettre la remorque au contact du quai ; puis déploie les béquilles de l'avant de la remorque. Ce qui lui permet de faire repartir le véhicule tracteur en laissant la remorque pour le travail de manutention.

L'équilibre rappelé plus haut obtenu par l'attelage du véhicule semi-remorque est perdu quand la remorque est dételée ; elle repose en partie avant sur ses béquilles. Cette situation pose un problème technique.

En raison des béquilles le manutentionnaire n'immobilise pas les roues, puisqu'il considère que des béquilles reposant sur le sol immobilisent déjà la remorque. Même, s'il surmonte son préjugé, dans le cas des remorques de semi-remorques, les roues étant seulement à l'arrière un dispositif bloqueur ne pourrait pas empêcher une rotation accidentelle de la remorque, soit sous l'effet d'un choc avec un autre véhicule tel qu'un chariot élévateur, voire un camion de transport ou bien un déséquilibre du poids lors du chargement. Ce qui constitue une première cause d'accident.

Ce type de remorque présente un autre risque d'accident qui provient du fait que les roues et les béquilles n'étant pas aux extrémités avant et arrière, la remorque présente un porte-à-faux qui n'est plus compensé par le tracteur. Il est fréquent que lors du chargement ou déchargement le véhicule tracteur soit parti. Sans le poids du moteur, le poids du chargement et du chariot élévateur appuiera sur le plancher de la remorque au niveau du porte-à-faux avant ou arrière en enfonçant l'avant ou l'arrière ce qui soulèvera la partie opposée arrière ou avant. Donc il se présente un risque de cabrage, par conséquent de chute.

Suivant le type d'engin le porte-à-faux n'est pas situé au même endroit. Le moyen d'immobilisation connu par le document EP2236445 comprend un chariot. Par conséquent, il peut être placé à des endroits différents. Mais, pour pouvoir circuler sans être gêné par le véhicule ou la remorque le rail de guidage connu est situé latéralement par rapport à l'engin à immobiliser et le chariot circule sur le rail de guidage du véhicule. Il en résulte que ce bloqueur connu ne permet pas de venir au niveau du porte-à-faux. De plus, ce dispositif immobilise une roue qui elle-même transmet l'immobilisation au véhicule. Il s'agit d'une immobilisation indirecte. Le moyen de guidage doit être d'une hauteur suffisante pour empêcher un dépassement par le véhicule. Par conséquent, les chariots et moyens de guidage de dispositifs d'immobilisation connus ne permettent pas un accès à l'axe longitudinal des remorques, emplacement qui permet d'équilibrer l'immobilisation en empêchant les rotations ou le cabrage. US6089544A décrit un dispositif selon le préambule de la revendication 1.

L'invention a pour but de résoudre ces problèmes en empêchant tout à la fois une rotation, un cabrage, ou un flambage des béquilles d'une remorque lors de la manutention par un dispositif d'immobilisation. Le dispositif selon l'invention est réalisé selon les caractéristiques de la revendication 1 et comprend une base ancrée au sol formant rail moyen de guidage d'un chariot coulissant. Le chariot est équipé d'au moins un bras d'élévation prolongé par une tête de blocage muni d'une pièce de maintien du pivot d'attelage de la remorque, le bras d'élévation et la tête de blocage formant d'une béquille amovible. La base coulissante est placée suivant l'axe longitudinal de la remorque à quai, axe où est situé le rond de rotation situé sous la remorque pour l'attelage avec le pivot. Les remorques étant de différentes longueurs, le coulissement du chariot sur la base lui permet de se déplacer vers le rond de rotation en vue de reconstituer un équilibre identique à celui du semi-remorque attelé.

Le chariot étant plat et coulissant présente une hauteur suffisamment faible pour se déplacer sous la remorque en attente de transbordements. Ce qui lui permet d'être placé au niveau de l'axe central de la remorque et de se déplacer à proximité du rond de rotation. A ce moment, la béquille amovible peut être déployée en position travail c'est-à-dire verrouillée au rond de la remorque ce qui immobilise et rééquilibre ladite remorque et supprime de ce fait les risques de cabrage, de rotation et de chute. Ces déplacements du chariot et de la tête ou de la béquille amovible sont possibles par l'actionnement à l'aide d'une colonne technique déportée qui est placée à proximité du quai en dehors de l'emplacement du véhicule. Ainsi les manutentionnaires ont accès aux organes de commande et de signalisation placés dans cette colonne.

L'invention a encore pour objet l'utilisation, selon la revendication 7, d'un dispositif comprenant une base ancrée au sol formant rail qui permet de guider un chariot coulissant, le chariot étant équipé d'au moins un bras d'élévation prolongé par une tête de blocage munie d'une pièce de maintien du pivot d'attelage de remorque, le bras d'élévation et la tête de blocage formant une béquille amovible commandée depuis une colonne technique déportée comme décrit ci-dessus pour immobiliser une remorque de semi-remorque pendant le chargement ou le déchargement de marchandises à un quai de chargement et déchargement.

L'invention sera mieux comprise à la lecture des figures données à titre d'exemples, non limitatifs et sur lesquels :
La Fig. 1 représente en élévation une vue de ¾ de côté du dispositif de blocage selon l'invention en position repos.
La Fig. 2 est une vue d'ensemble en élévation du quai et de la remorque partiellement arrachée montrant l'emplacement du dispositif de blocage selon l'invention correspondant à la Fig. 1 en position repos.
La Fig. 3 est une vue en élévation de la remorque partiellement arrachée et du dispositif de blocage selon la Fig. précédente de l'emplacement du dispositif selon l'invention en position de mise en place, bavette relevée.

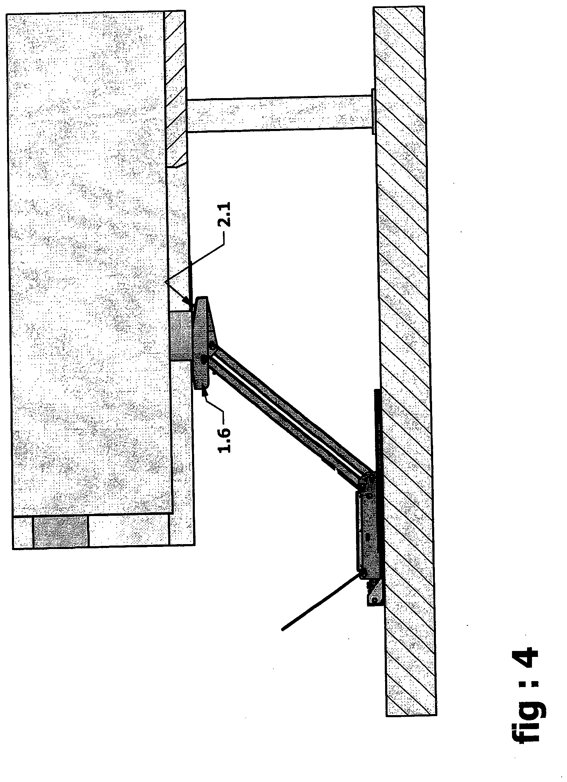

La Fig. 4 est une vue longitudinale selon les Fig. 2 et 3 de l'emplacement du dispositif selon l'invention la tête de la béquille relevée en contact avec le pivot d'attelage de la remorque.
La Fig. 5 est une de dessus qui montre que le dispositif selon l'invention se déplace suivant l'axe longitudinal de la remorque jusqu'au pivot d'attelage.
La Fig. 6 est une vue longitudinale selon les Fig. 2, 3, 4 et 5 de l'emplacement du dispositif selon l'invention en position de blocage ou immobilisation de la remorque, bavette et béquille relevées.

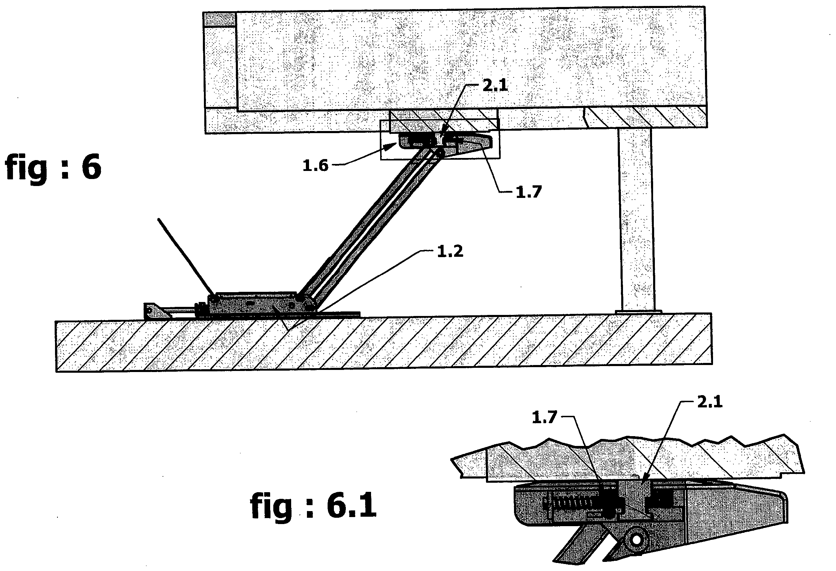

La Fig. 6. 1 est une vue de côté de la tête de la béquille qui verrouille le pivot d'attelage de la remorque selon la Fig. précédente ce qui bloque la remorque et empêche la rotation et le cabrage.

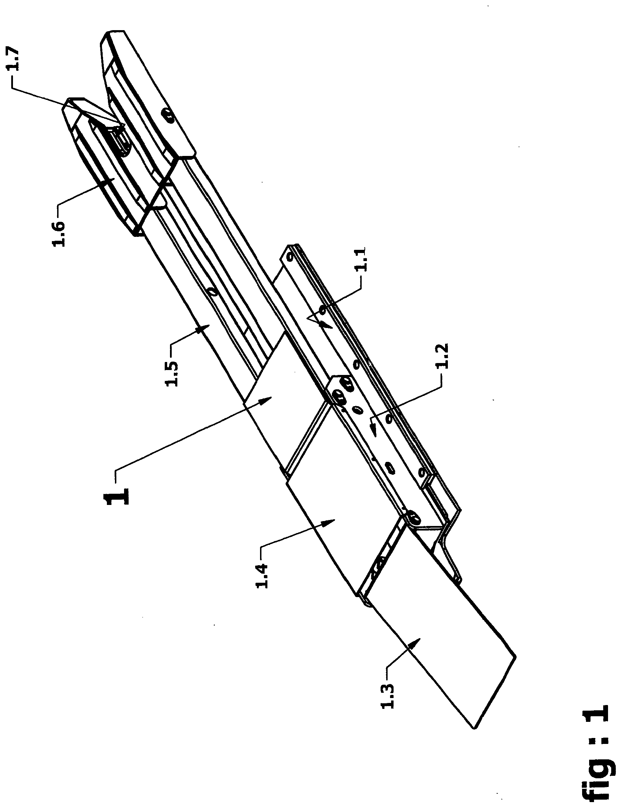

Le dispositif d'immobilisation 1 selon l'invention représenté sur la fig. 1 est en position repos, tous ses éléments sont en position basse. Cette position basse permet à un véhicule de passer au-dessus du dispositif. Ce dispositif comprend une base 1.1 ancrée dans le sol. Un chariot plat 1.2 et monté coulissant dans la base 1.1 qui lui sert de rail de guidage. Ce chariot est mu par un dispositif hydraulique et présente une bavette de sécurité 1.3 qui pivote selon un axe placé sur la partie arrière du chariot 1.2. Sur la figure 1 la bavette au repos présente une extrémité tombée sur le sol et l'autre extrémité liée au chariot au niveau de l'axe des charnières de pivotement. Cette bavette est dans sa position la plus basse qui est la position repos. Les organes de fonctionnement placés dans le chariot 1.2 sont protégés et cachés par un capot plat 1.4 situé en partie haute dudit chariot 1.2. En partie avant le chariot présente des bras d'élévation 1.5 permettant l'élévation d'une tête de blocage 1.6 située à l'extrémité de ces bras d'élévation 1.5. La tête de blocage comprend une pièce 1.7 de maintien du pivot d'attelage.

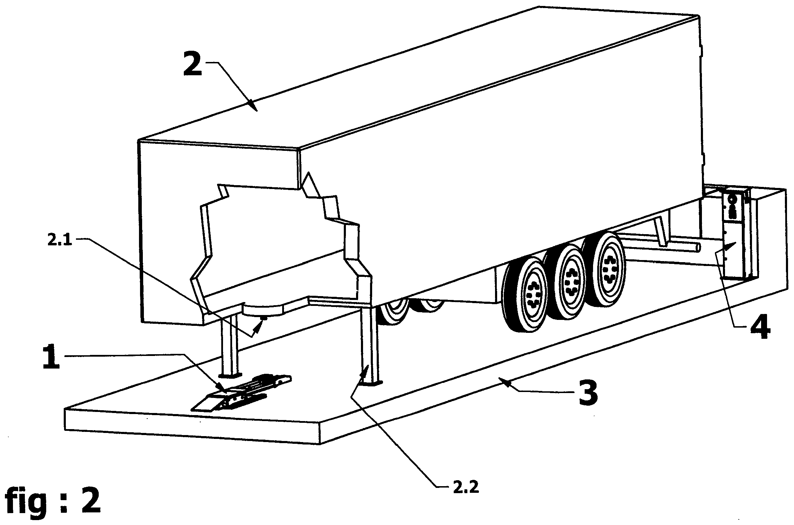

L'emplacement du dispositif de béquillage 1 est représenté sur la fig. 2 qui est une vue d'ensemble montrant une remorque dételée qui a accosté le quai de chargement. La remorque 2 présente en partie inférieure avant le pivot d'attelage 2.1. Les béquille 2.2 placées à l'avant de la remorque sont en appui sur le sol. Le dispositif d'immobilisation amovible 1 est placé dans l'axe longitudinal du quai de chargement 3 qui est confondu avec l'axe longitudinal de la remorque 2, axe qui passe par le pivot d'attelage 2.1. La béquille amovible du dispositif 1 selon l'invention doit venir se fixer audit pivot d'attelage 2.1. Le dispositif d'immobilisation 1 comprend également une colonne technique 4 déportée qui permet d'actionner ce dispositif sans aller sous la remorque 2.

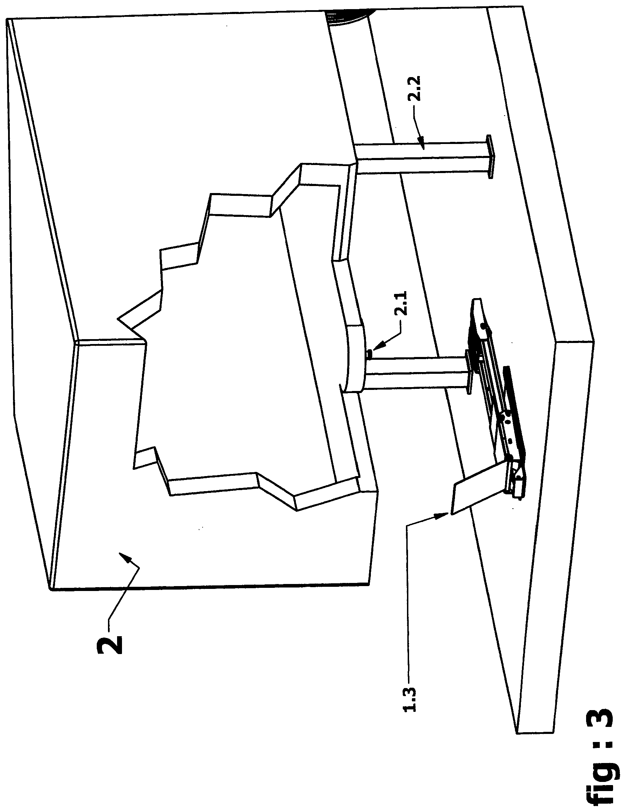

La fig. 3 illustre que quand le chariot 1.2 mû par le dispositif hydraulique arrive à son emplacement de travail, la bavette1.3 est levée en position haute. Si un tracteur tente de venir accrocher la remorque, la bavette 1.3 sera poussée par le pare-chocs arrière du véhicule et fera fonctionner la sirène lumineuse située sur la colonne technique 4 pour signaler au chauffeur un arrêt immédiat avant destruction du dispositif de béquillage 1.

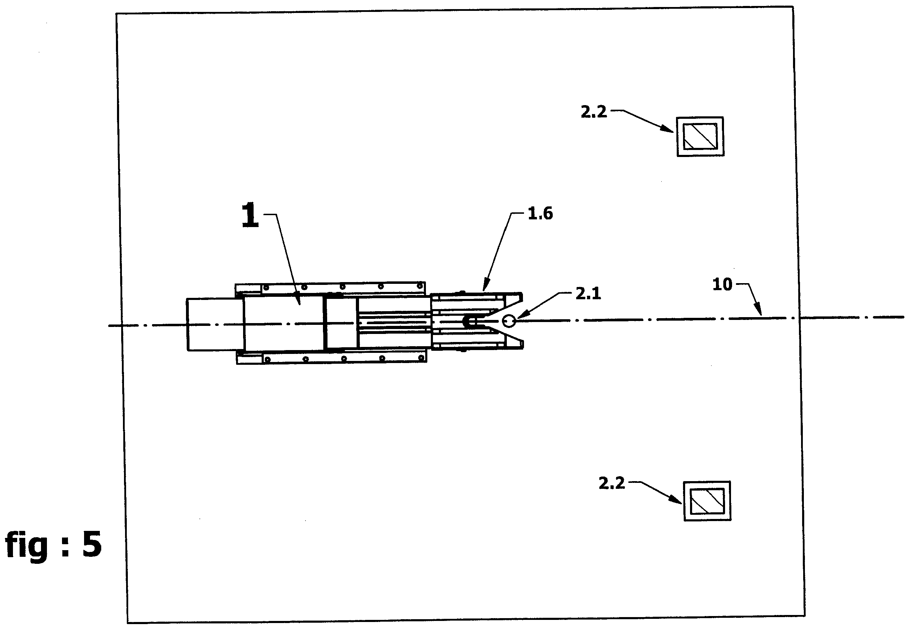

Ensuite, avec les bras d'élévation 1.5 la tête 1.6 est montée jusqu'au contact avec le rond de rotation situé sous la remorque de semi-remorque. La tête de blocage 1.6 présente une forme spécifique avec une ouverture évasée en forme de V vue du dessus, le fond de ce V étant prolongé par une rainure de dimensions qui coopère avec le pivot 2.1 tel que représenté sur la figure 5 qui illustre l'emplacement théorique du pivot 2.1 en montrant que si l'avant de la remorque est légèrement désaxé, la forme de la tête de blocage 1.6 et le jeu dans les glissières de la base 1.1 permettront de placer le pivot d'attelage 2.1 dans la pièce de maintien 1.7. Il en résulte que l'axe longitudinal de la remorque 4 redeviendra confondu avec l'axe longitudinal 10 du dispositif 1 et du quai 3.

Le chariot coulissant 1.2 étant une base coulissante a avancé ce qui a contraint le pivot 2.1 à venir s'insérer dans la pièce de maintien 1.7 comme représenté sur la fig. 6. La pièce de maintien signalera la position bloquée de la remorque. Le détail de ce blocage est représenté sur la fig. 6.1. Cette figure de détails illustre que le dispositif d'immobilisation 1 ne supporte pas le poids et la charge de la remorque puisque les béquilles 2.2 de cette remorque 2 sont toujours en place sur le sol. Le dispositif 1 empêche la remorque d'avancer ou de pivoter. Donc il évite le flambage des béquilles et le cabrage.

Ainsi, l'équilibre de la remorque attelée conçue lors de la fabrication est retrouvé.

Bien que l'invention ait été décrite en liaison avec des structures particulières, elle n'y est nullement limitée et on peut y apporter de nombreuses variantes.

Les combinaisons des différentes réalisations représentées sur les figures ou décrites ci-dessus ne sortent pas du cadre de l'invention.

## Revendications

1. Dispositif d'immobilisation de véhicule (1) de transport de marchandises pendant les phases de transbordement dudit véhicule, comprenant un moyen de guidage positionné, un chariot mobile (1.2) le long d'un moyen de guidage et un moyen de déplacement dudit chariot (1.2) le long du moyen de guidage, le dispositif étant un dispositif d'immobilisation de remorque (2) à roues uniquement arrière et à pivot d'attelage (2.1) de fixation à un véhicule tracteur, le dispositif comprenant une base (1.1) ancrée au sol formant rail moyen de guidage du chariot (1.2) coulissant, ledit chariot (1.2) est équipé d'au moins un bras d'élévation (1.5) prolongé par une tête de blocage (1.6) munie d'une pièce (1.7) de maintien du pivot d'attelage de la remorque, le bras d'élévation (1.5) et la tête de blocage (1.6) formant d'une béquille amovible, la base coulissante étant placée suivant l'axe longitudinal (10) de la remorque à quai, axe où est situé le rond de rotation situé sous la remorque (2) pour l'attelage avec le pivot, dans lequel le chariot (1.2) présente une bavette de sécurité (1.3),
**caractérisé en ce que** le dispositif (1) comprend :
une colonne technique (4) déportée permettant d'actionner ledit dispositif (1) sans aller sous la remorque (2), la colonne technique (4) comprenant une sirène lumineuse, la bavette étant configurée telle qu'étant en position haute, et si un tracteur tente de venir accrocher la remorque, la bavette de sécurité (1.3) sera poussée par le pare-chocs arrière du véhicule et fera fonctionner la sirène lumineuse située sur la colonne technique (4) pour signaler au chauffeur un arrêt immédiat avant destruction du dispositif (1).

2. Dispositif d'immobilisation (1) selon la revendication 1, dans lequel le chariot (1.2) étant plat est mu coulissant dans la base (1.1).

3. Dispositif d'immobilisation (1) selon la revendication précédente dans lequel le chariot (1.2) est actionné coulissant dans la base (1.1) par un dispositif hydraulique.

4. Dispositif d'immobilisation (1) selon la revendication précédente, dans lequel la bavette de sécurité (1.3) pivote selon un axe placé sur la partie arriére du chariot (1.2).

5. Dispositif d'immobilisation (1) selon l'une des revendications précédentes, dans lequel le chariot (1.2) présente un capot plat (1.4) situé en partie haute dudit chariot (1.2) de protection et dissimulation des organes de fonctionnement placés dans le chariot (1.2).

6. Dispositif d'immobilisation (1) selon l'une des revendications précédentes, dans lequel la tête de blocage (1.6) présente une forme spécifique avec une ouverture évasée en forme de V vue du dessus, le fond de ce V étant prolongé par une rainure de dimensions qui coopère avec le pivot (2.1).

7. Utilisation, lors d'un transbordement de chargement entre un quai et une remorque d'un véhicule semi-remorque, d'un dispositif selon l'une des revendications précédentes, le dispositif comprenant une base ancrée au sol formant rail qui permet de guider un chariot coulissant, le chariot (1.2) étant équipé d'au moins un bras d'élévation prolongé par une tête de blocage munie d'une pièce de maintien du pivot d'attelage (2.1) de la remorque, le bras d'élévation et la tête de blocage (1.6) formant une béquille amovible commandée depuis une colonne technique (4) pour immobiliser la semi-remorque pendant le chargement ou le déchargement de marchandises à un quai de chargement et déchargement..

## Patentansprüche

1. Vorrichtung zum Feststellen eines Fahrzeugs (1) zum Transportieren von Gütern während der Umschlagphasen des Fahrzeugs, umfassend ein positioniertes Führungsmittel, einen fahrbaren Schlitten (1.2) entlang eines Führungsmittels und ein Mittel zum Bewegen des Schlittens (1.2) entlang der Führung bedeutet, wobei die Vorrichtung eine Anhänger-Wegfahrsperre (2) mit nur Hinterrädern und einem Kupplungsbolzen (2.1) zum Anbringen an einem Zugfahrzeug ist, wobei die Vorrichtung eine im Boden verankerte Basis (1.1) umfasst, die eine Mittelführungsschiene des Schlittens (1.2 ), der Wagen (1.2) ist mit mindestens einem Hubarm (1.5) ausgestattet, der durch einen Blockierkopf (1.6) verlängert ist, der mit einem Teil (1.7) zum Halten des Kupplungsbolzens des Anhängers, des Hubarms (1.5) und der Blockierkopf (1.6), der eine abnehmbare Krücke bildet, wobei die Gleitbasis entlang der Längsachse (10) des angedockten Anhängers angeordnet ist, Achse, wo der Drehring unter dem Anhänger angeordnet ist, um mit dem Drehpunkt zu koppeln, der Laufwagen (1.2) hat eine Sicherung Klappe (1.3), **dadurch gekennzeichnet, dass** die Vorrichtung umfasst:
eine entfernte technische Säule (4), die es ermöglicht, die Vorrichtung (1) zu betätigen, ohne unter den Anhänger (2) zu gehen, wobei die technische Säule (4) eine Lichtsirene umfasst, wobei die Klappe so konfiguriert ist, dass sie sich in der hohen Position befindet, und Wenn ein Traktor versucht, den Anhänger anzukuppeln, wird die Sicherheitsklappe (1.3) von der hinteren Stoßstange des Fahrzeugs gedrückt und aktiviert die Lichtsirene an der Techniksäule (4), um dem Fahrer ein sofortiges Anhalten vor dem Gerät zu signalisieren wird zerstört (1).

2. Immobilisierungsvorrichtung (1) nach Anspruch 1, wobei der Schlitten (1.2) flach in der Basis (1.1) verschiebbar ist.

3. Immobilisierungsvorrichtung (1) nach dem vorhergehenden Anspruch, wobei der Schlitten (1.2) in der Basis (1.1) verschiebbar durch eine hydraulische Einrichtung betätigbar ist.

4. Immobilisierungsvorrichtung (1) nach dem vorhergehenden Anspruch, wobei die Sicherheitsklappe (1.3) um eine am hinteren Teil des Schlittens (1.2) angeordnete Achse schwenkt.

5. Immobilisierungsvorrichtung (1) nach einem der vorhergehenden Ansprüche, wobei der Schlitten (1.2) eine im oberen Teil des Schlittens (1.2) angeordnete flache Abdeckung (1.4) zum Schutz und Verbergen der im Schlitten angeordneten Bedienelemente aufweist (1.2).

6. Immobilisierungsvorrichtung (1) nach einem der vorangehenden Ansprüche, wobei der Verriegelungskopf (1.6) eine spezifische Form mit einer von oben gesehen konisch erweiterten V-förmigen Öffnung aufweist, wobei der Boden dieses V durch eine Nut mit zusammenwirkenden Abmessungen verlängert ist mit dem Zapfen (2.1).

7. Verwendung einer Vorrichtung nach einem der vorhergehenden Ansprüche während eines Umschlags einer Ladung zwischen einem Dock und einem Anhänger eines Sattelfahrzeugs, umfassend eine im Boden verankerte Basis, die eine Schiene bildet, die eine Führung ermöglicht einen Gleitschlitten, wobei der Schlitten (1.2) mit mindestens einem Hebearm ausgestattet ist, der durch einen Blockierkopf verlängert ist, der mit einem Teil zum Halten des Kupplungsbolzens (2.1) des Anhängers versehen ist, wobei der Hebearm und der Blockierkopf (1.6) bilden a abnehmbarer Ständer, der von einer technischen Säule (4) gesteuert wird, um den Sattelanhänger während des Be- oder Entladens von Gütern an einer Lade- und Entladerampe zu immobilisieren.

## Claims

1. Device for immobilising a goods transport vehicle (1) during the docking phases of said vehicle, comprising a positioned guiding means, a carriage (1.2) that moves along a guiding means and a means of moving said carriage (1.2) along the guiding means, the device being a device for immobilising a trailer (2) having wheels only at the rear and a king pin (2.1) for coupling it to a tractor unit, the device comprising a base (1.1) anchored in the ground and forming a rail serving as a guiding means for the sliding carriage (1.2); said carriage (1.2) is equipped with at least one lifting arm (1.5) extended by a blocking head (1.6) fitted with a part (1.7) for supporting the king pin of the trailer, the lifting arm (1.5) and the blocking head (1.6) forming a removable prop, the sliding base being placed in the longitudinal axis (10) of the docked trailer, axis where the rotation circle situated underneath the trailer (2) is located for the coupling with the king pin, wherein the carriage (1.2) has a safety flap (1.3), **characterised in that** said device (1) comprises:
a remote technical column (4) enabling said device (1) to be operated without having to go underneath the trailer (2), the technical column (4) comprising a siren with a light, the flap being configured so that when it is in the up position, if a tractor unit attempts to come and connect to the trailer, the safety flap (1.3) will be pushed by the vehicle's rear bumper and trigger the siren and light situated on the technical column (4) to indicate to the driver that he must stop immediately before destroying the device (1).

2. Immobilising device (1) according to claim 1, wherein the carriage (1.2) being flat slides in the base (1.1).

3. Immobilising device (1) according to the previous claim wherein the carriage (1.2) is caused to slide in the base (1.1) by a hydraulic device.

4. Immobilising device (1) according to the previous claim, wherein the safety flap (1.3) pivots around a spindle placed the rear part of the carriage (1.2).

5. Immobilising device (1) according to one of the preceding claims, wherein the carriage (1.2) has a flat cover (1.4) located in the upper part of said carriage (1.2) protecting and concealing the operational components placed inside the carriage (1.2).

6. Immobilising device (1) according to one of the preceding claims, wherein the blocking head (1.6) has a specific shape with a flared opening in the form of a V when seen from above, the bottom of this V being extended by a groove whose dimensions allow it to cooperate with the king pin (2.1).

7. Use, when a semi-trailer vehicle is docked for goods to be transferred between the dock and the trailer, of a device according to one of the preceding claims, the device comprising a base anchored in the ground and forming a rail that guides a sliding carriage, the carriage (1.2) being equipped with at least one lifting arm extended by a blocking head fitted with a part for supporting the king pin (2.1) of the trailer, the lifting arm and the blocking head (1.6) forming a removable prop controlled from a technical column (4) to immobilise the semi-trailer during the loading or unloading of goods at a loading or unloading dock.
